# EUROPEAN PATENT SPECIFICATION

(11) **EP 3 780 447 B1**
(45) Date of publication and mention of the grant of the patent: **31.05.2023**
(21) Application number: 19793814.5
(22) Date of filing: 27.02.2019
(51) Int. Cl.: H04L 1/16, H04L 1/18, H04L 1/00

(54) **HARQ TECHNOLOGY-BASED COMMUNICATION METHOD, DEVICE, AND SYSTEM**
AUF HARQ-TECHNOLOGIE BASIERENDES KOMMUNIKATIONSVERFAHREN, VORRICHTUNG UND SYSTEM
PROCÉDÉ DE COMMUNICATION BASÉ SUR LA TECHNOLOGIE HARQ, DISPOSITIF ET SYSTÈME

(30) Priority: 26.04.2018 CN 201810386767
(43) Date of publication of application: 17.02.2021
(73) Proprietor: HUAWEI TECHNOLOGIES CO., LTD., Shenzhen, Guangdong 518129 (CN)
(72) Inventor: YU, Jian, Shenzhen, Guangdong 518129 (CN); LIN, Wei, Shenzhen, Guangdong 518129 (CN)
(74) Representative: Körber, Martin Hans
(86) International application number: PCT/CN2019/076377
(87) International publication number: WO 2019/205803

(56) References cited:
- CN-A- 103 888 909
- CN-A- 107 027 184
- CN-A- 107 040 332
- US-A1- 2008 186 886
- US-A1- 2016 380 727
- US-B1- 9 876 614

## Description

### TECHNICAL FIELD

Embodiments of this application relate to the field of communications technologies, and in particular, to a hybrid automatic repeat request (Hybrid Automatic Repeat Request, HARQ) technology-based communication method, device.

### BACKGROUND

A main working principle of the HARQ technology is as follows: A receive end pre-stores data previously received from a transmit end. When receiving retransmitted data from the transmit end again, the receive end performs combination processing on the previously received data and the retransmitted data, thereby increasing a decoding success rate and increasing a data transmission rate. Such an advantage of the HARQ technology makes it possible to be one of major technologies of a next-generation standard for a wireless local area network (Wireless Local Area Network, WLAN) system.

When the HARQ technology is applied to the WLAN, how to design a corresponding data packet format based on features of the HARQ technology and the WLAN becomes an urgent problem to be discussed.

US 2008/186886 A1 discloses a HARQ for a broadband wireless communication system. In particular, when HARQ is carried out using a fixed resource allocation scheme, a bitmap is used to indicate whether HARQ packets transmitted in a current frame are new packets or retransmission packets.

US 9876614 B1 discloses a method for transmission of media access control protocol data units (MPDUs) over a WLAN communication channel.

### SUMMARY

Embodiments of this application provide a hybrid automatic repeat request HARQ technology-based communication method, device, and system, to support a HARQ process of multi-user data transmission.

To achieve the foregoing objectives, the following technical solutions are used in the embodiments of this application.

According to a first aspect, an embodiment of this application provides a HARQ technology-based communication method, including: generating, by a first device, at least one transmission indicator used to indicate that data is retransmitted data or new transmitted data and the data, and sending the at least one transmission indicator and the data to the at least one second device, where the at least one transmission indicator is in a one-to-one correspondence with the data. According to the method provided in this embodiment of this application, the first device may simultaneously transmit, to one or more users, the data and the transmission indicator indicating that the data transmitted by the first device is the new transmitted data/retransmitted data, so that the second device performs HARQ processing on the received data based on the transmission indicator, to implement a HARQ process of multi-user data transmission.

Moreover, the first device sends, to the at least one second device, a first physical layer protocol data unit (PHY Protocol Data Unit, PPDU) including the at least one transmission indicator and the data. In this way, the at least one transmission indicator and the data are carried on a same PPDU and sent to the one or more second devices, so that the HARQ technology can be applied to multi-user data transmission, thereby improving HARQ communication efficiency. In addition, centralized management is performed by one PPDU on the data of the one or more second devices and transmission indicators corresponding to the data, to reduce data transmission overheads and improve data transmission efficiency.

Furthermore, the first PPDU includes a plurality of MPDUs, a first MPDU in the plurality of MPDUs is configured to carry the transmission indicator, and an MPDU other than the first MPDU in the plurality of MPDUs is configured to carry the data. The first MPDU carrying the at least one transmission indicator and the MPDU other than the first PDU carrying the data are sent using different modulation and coding schemes. When the transmission indicator of the second device is used to indicate that the data is retransmitted data, the first MPDU further carries HARQ information required by the second device for combining the data. The retransmitted data is sent using the same MCS of a new transmission. In this way, the first device may indicate, through an MPDU in an A-MPDU, that data carried on another MPDU is new transmitted data or retransmitted data, thereby improving transmission efficiency.

In an implementation form of the first aspect, the MPDU other than the first MPDU in the plurality of MPDUs is carried on at least one HARQ block, the transmission indicator of the second device includes at least one HARQ block identifier, and the at least one HARQ block identifier is used to indicate a HARQ block carrying new transmitted data or a HARQ block carrying retransmitted data in the at least one HARQ block. In this way, data in which HARQ block is the new transmitted data and data in which HARQ block is the retransmitted data may be indicated by the HARQ block identifier, which is simple and easy to implement.

According to a second aspect, a communications apparatus is provided. The communications apparatus is configured to perform the HARQ technology-based communication method according to any one of the first aspect, or the foregoing possible designs.

According to a third aspect, a computer-readable storage medium is provided. The computer-readable storage medium stores an instruction, and when the instruction is run on a computer, the computer is enabled to perform the HARQ technology-based communication method according to any one of the first aspect, or the foregoing possible designs.

According to a fourth aspect, a computer program product including an instruction is provided. When the computer program product runs on a computer, the computer is enabled to perform the HARQ technology-based communication method according to any one of the first aspect, or the foregoing possible designs.

### BRIEF DESCRIPTION OF DRAWINGS

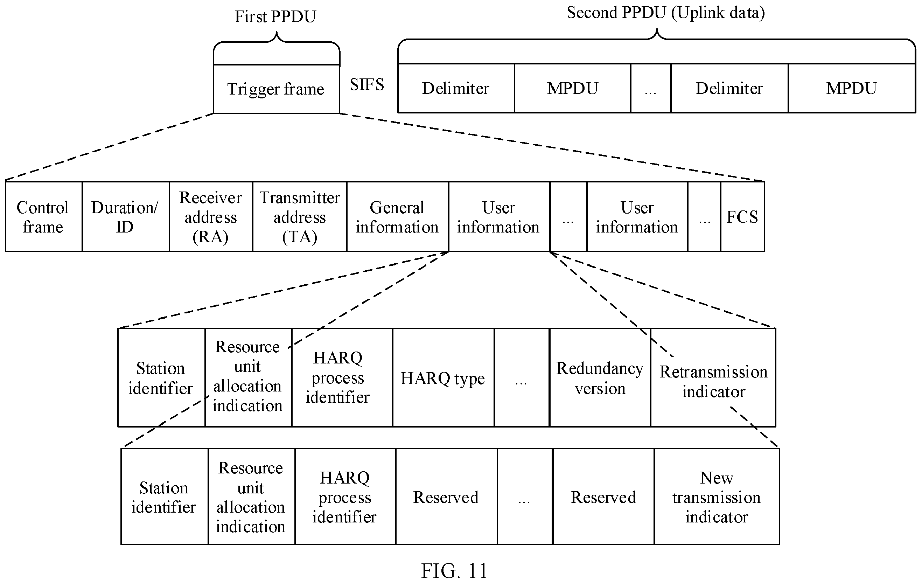

It is noted that embodiments in FIG. 11 are not part of the invention but illustrative examples helpful for understanding the invention.
FIG. 1 is a simplified schematic diagram of a system architecture according to an embodiment of this application;
FIG. 2 is a schematic diagram of an existing PPDU format;
FIG. 3 is a schematic composition diagram of a communications apparatus according to an embodiment of this application;
FIG. 4 is a flowchart of a HARQ technology-based communication method according to an embodiment of this application;
FIG. 5 is a schematic diagram of a PPDU format according to an embodiment of this application;
FIG. 5a is a schematic diagram of another PPDU format according to an embodiment of this application;
FIG. 6 is a schematic diagram of still another PPDU format according to an embodiment of this application;
FIG. 7 is a schematic diagram of yet another PPDU format according to an embodiment of this application;
FIG. 8 is a schematic diagram of still yet another PPDU format according to an embodiment of this application;
FIG. 9 is a schematic diagram of a data packet format according to an embodiment of this application;
FIG. 10 is a flowchart of another HARQ technology-based communication method according to an embodiment of this application;
FIG. 11 is a schematic diagram of another data packet format according to an embodiment of this application;
FIG. 12 is a schematic composition diagram of another communications apparatus according to an embodiment of this application;
FIG. 13 is a schematic composition diagram of still another communications apparatus according to an embodiment of this application; and
FIG. 14 is a schematic composition diagram of a HARQ technology-based communications system according to an embodiment of this application.

### DESCRIPTION OF EMBODIMENTS

To facilitate understanding of the solutions provided in the embodiments of this application, important terms in this application are first explained.

Physical layer protocol data unit (PHY Protocol Data Unit, PPDU): It is a data packet structure specified in the WLAN standard, and may include a plurality of signaling fields, a data field, and the like. The signaling field is used to carry some control information, and the data field includes a medium access control (Medium Access Control, MAC) frame used to carry data and a MAC frame header.

Media access control protocol data unit (Medium Access Control Protocol Data Unit, MPDU): It is also referred to as a MAC frame and is used to carry user data. A plurality of MPDUs may be aggregated and sent by using one physical layer preamble. Generally, the plurality of MPDUs that are aggregated together are referred to as an aggregated MPDU (Aggregated MAC Protocol Data Unit, A-MPDU). In an A-MPDU, adjacent MPDUs may be separated by using a delimiter (Delimiter).

The following describes the method provided in the embodiments of this application with reference to the accompanying drawings in this specification.

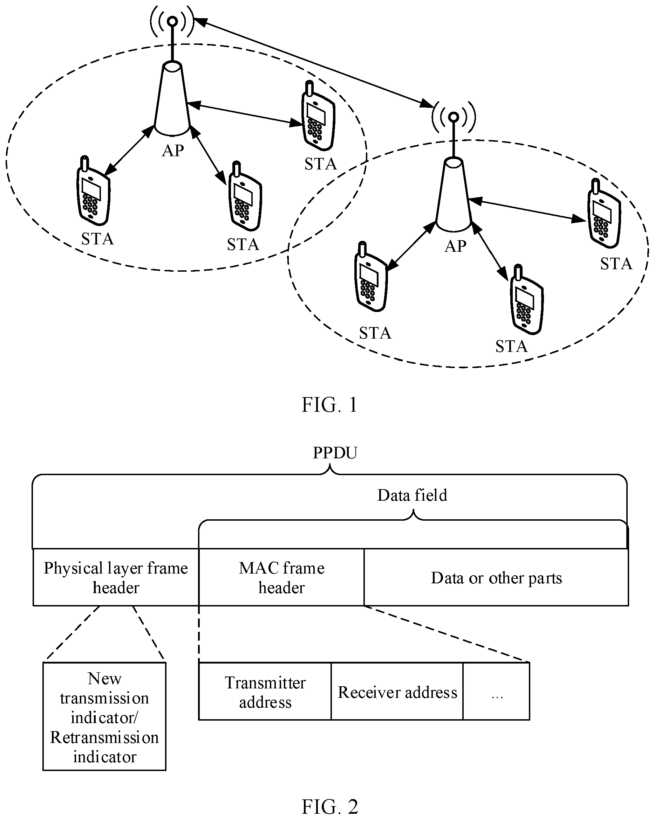

A HARQ technology-based communication method according to the embodiments of this application may be applicable to a communications system shown in FIG. 1. The communications system may support single-user uplink transmission/downlink transmission, multi-user uplink transmission/downlink transmission, or device-to-device (Device to Device, D2D) transmission. Specifically, the system shown in FIG. 1 may be a WLAN system, for example, may be a WLAN system specified in the 802. 11ax standard, or may be a next-generation WLAN system or a next-next-generation WLAN system, or another actual communications system. This is not limited.

As shown in FIG. 1, the communications system may include a plurality of access points (Access Point, AP), and each access point may cover a plurality of stations (Station, STA). The AP is mainly configured to implement functions such as a radio physical control function, resource scheduling and radio resource management, radio access control, and mobility management, and may be an access network (Access Network, AN)/radio access network (Radio Access Network, RAN) device, a base station (NodeB, NB), an evolved NodeB (Evolved NodeB), an access node, a next-generation NodeB (Next-Generation NodeB, gNB), a transmit receive point (Transmit Receive Point, TRP), a transmission point (Transmission Point, TP), or another access node. The STA may be configured to connect to the AP by using a wireless air interface, and then access a data network. The STA may be user equipment (User Equipment, UE), for example, a mobile phone, or may be a cellular phone, a cordless phone, a session initiation protocol (Session Initiation Protocol, SIP) phone, a smartphone, a wireless local loop (Wireless Local Loop, WLL) station, a personal digital assistant (Personal Digital Assistant, PDA), a laptop computer, a handheld communications device, a handheld computing device, a satellite wireless device, a wireless modem, a TV set-top box (Set-Top Box, STB), customer premises equipment (Customer Premises Equipment ,CPE) and/or another equipment used for communication in a wireless system. It should be noted that FIG. 1 is merely an example framework diagram, and a quantity of nodes included in FIG. 1 is not limited. In addition to function nodes shown in FIG. 1, the communications system may further include another node, for example, a core network device, a gateway device, or an application server. This is not limited.

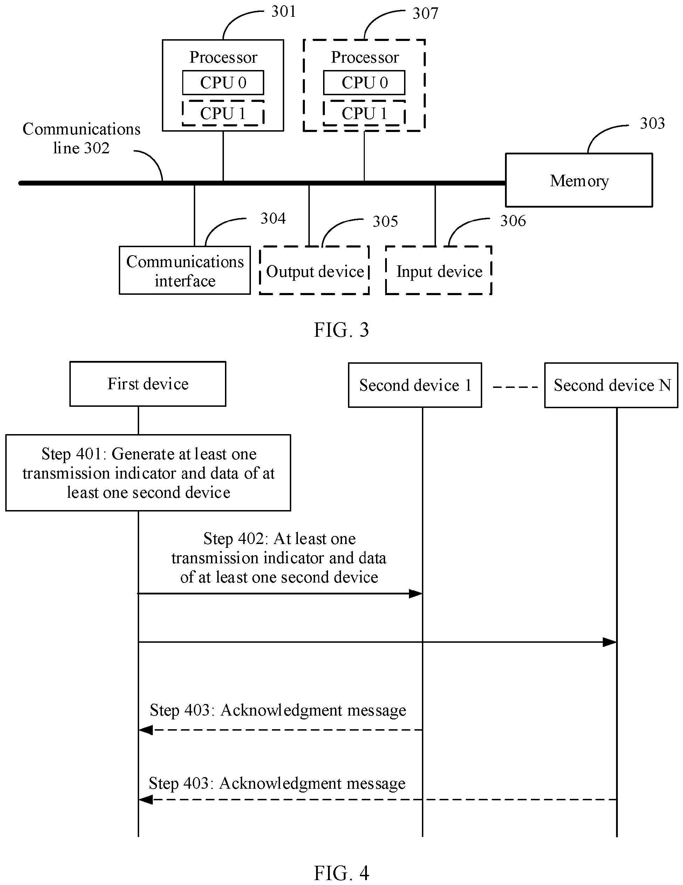

In the system shown in FIG. 1, a HARQ process may be supported between different APs, between different STAs, or between an AP and a STA covered by the AP. For example, in the prior art, the HARQ process is usually supported through a PPDU shown in FIG. 2. As shown in FIG. 2, a physical layer frame header and a more robust MAC frame header are added to a data (Data) field included in the PPDU. The physical layer frame header carries a retransmission indicator/new transmission indicator, where the retransmission indicator is used to indicate that data carried in the data field is retransmitted data, and the new transmission indicator is used to indicate that data carried in the data field is new transmitted data; and the MAC frame header carries information such as a transmitter address and a receiver address. A transmit end may send data to a receive end through the PPDU shown in FIG. 2. If the receive end determines, based on the retransmission indicator in the PPDU, that the received data is retransmitted data, and learns of, based on a transmitter address and a receiver address, a transmitter and a receiver of the received data, the receive end combines the currently received data with data previously sent by the same transmitter to the receive end. Although the PPDU shown in FIG. 2 may support the HARQ process, a same PPDU supports only a HARQ process of single-user data transmission, but does not support a HARQ process of multi-user data transmission. To support the HARQ process of multi-user data transmission, an embodiment of this application provides a HARQ technology-based communication method with reference to the system shown in FIG. 1. For details, refer to the solution shown in FIG. 4.

Specifically, to implement the HARQ technology-based communication method according to the embodiments of this application, the AP and the STA in FIG. 1 may include components shown in FIG. 3. FIG. 3 is a schematic composition diagram of a communications apparatus according to an embodiment of this application. The communications apparatus 300 includes at least one processor 301, a communications line 302, and at least one communications interface 304. Optionally, the communications apparatus may further include a memory 303. The processor 301, the memory 303, and the communications interface 304 may be connected to each other by using the communications line 302.

The processor 301 may be a central processing unit (Central Processing Unit, CPU), or may be an application-specific integrated circuit (Application-Specific Integrated Circuit, ASIC), or one or more integrated circuits configured to implement the embodiments of this application, for example, one or more digital signal processors (Digital Signal Processor, DSP) or one or more field programmable gate arrays (Field Programmable Gate Array, FPGA).

The communications line 302 may include a path used to transmit information between the foregoing components.

The communications interface 304 is configured to communicate, by using any apparatus such as a transceiver, with another device or a communications network, for example, the Ethernet, a radio access network (Radio Access Network, RAN), or a wireless local area network (Wireless Local Area Network, WLAN).

The memory 303 may be a read-only memory (Read-Only Memory, ROM) or another type of static storage device capable of storing static information and an instruction, a random access memory (Random Access Memory, RAM) or another type of dynamic storage device capable of storing information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, optical disc storage (including a compact disc, a laser disc, an optical disc, a digital versatile disc, a Blu-ray disc, and the like), or magnetic disk storage medium or another magnetic storage device, or any other medium that is capable of carrying or storing expected program code in a form of an instruction or a data structure and that can be accessed by a computer. However, this application is not limited thereto. In a possible design, the memory 303 may be independent of the processor 301. In other words, the memory 303 may be a memory outside the processor 301. In this case, the memory 303 may be connected to the processor 301 by using the communications line 302, and is configured to store an executive instruction or application program code; and the processor 301 controls the execution, to implement the HARQ technology-based communication method according to the following embodiments of this application. In another possible design, the memory 303 may alternatively be integrated with the processor 301. In other words, the memory 303 may be an internal memory of the processor 301. For example, the memory 303 is a cache, and may be configured to temporarily store some data, instruction information, and the like.

In an implementation, the processor 301 may include one or more CPUs, for example, a CPU 0 and a CPU 1 in FIG. 3. In another implementation, the communications apparatus 300 may include a plurality of processors, for example, the processor 301 and a processor 307 in FIG. 3. In still another possible implementation, the communications apparatus 300 may further include an output device 305 and an input device 306.

It should be noted that the communications apparatus 300 may be a general-purpose device or a dedicated device. For example, the communications apparatus 300 may be a desktop computer, a portable network server, a PDA, a mobile phone, a tablet wireless terminal, an embedded device, or a device having a structure similar to that in FIG. 3. A type of the communications apparatus 300 is not limited in the embodiments of this application.

With reference to the communications system shown in FIG. 1, the HARQ technology-based communication method according to the embodiments of this application is described below by using an example in which the first device is any STA in FIG. 1 and the second device is any STA other than the first device in FIG. 1; or by using an example in which the first device is any AP in FIG. 1 and the second device is any STA in FIG. 1; or by using an example in which the first device is any STA in FIG. 1 and the second device is any AP in FIG. 1; or by using an example in which the first device is any AP in FIG. 1 and the second device is any AP other than the first device in FIG. 1.

FIG. 4 is a flowchart of a HARQ technology-based communication method according to an embodiment of this application. As shown in FIG. 4, the method may include the following steps.

Step 401: A first device generates at least one transmission indicator and data of at least one second device.

A quantity of the at least one second device is N, and a value of N is not limited.

The at least one transmission indicator may be used to indicate that the data of the at least one second device is retransmitted data or new transmitted data, and the at least one transmission indicator is in a one-to-one correspondence with the data of the at least one second device. When the transmission indicator is used to indicate that data of the second device is the retransmitted data, the transmission indicator may be referred to as a retransmission indicator; and when the transmission indicator is used to indicate that data of the second device is the new transmitted data, the transmission indicator may be referred to as a new transmission indicator. It should be noted that when all the data of the second device is the new transmitted data or the retransmitted data, that the at least one transmission indicator is in a one-to-one correspondence with the data of the at least one second device may be replaced with that the at least one transmission indicator is in a one-to-one correspondence with the at least one second device, to indicate that all the data of the second device is the new transmitted data or the retransmitted data. In addition, when some data in the data of the second device is the retransmitted data, and some data in the data of the second device is the new transmitted data, a retransmission indicator may be used to indicate that all the data of the second device is the retransmitted data.

In an example, the transmission indicator may use one bit to indicate new transmission or retransmission. For example, a value of the transmission indicator may be "0" or "1", where "0" is used to indicate that the data of the second device is the new transmitted data, and " 1" is used to indicate that the data of the second device is the retransmitted data. In another example, in addition to using "0" or "1" to indicate the new transmitted data or the retransmitted data, another symbol may be used to indicate the new transmitted data or the retransmitted data. For example, a symbol "A" may be used to indicate the new transmitted data, and a symbol "B" may be used to indicate the retransmitted data. This is not limited. Specifically, an expression form of the transmission indicator may be preconfigured. For example, during network deployment, the transmission indicator may be set to two different values: "0" or "1", to indicate the new transmitted data or the retransmitted data, and preconfigured for the first device and the second device.

Step 402: The first device sends the at least one transmission indicator and the data of the at least one second device to the at least one second device.

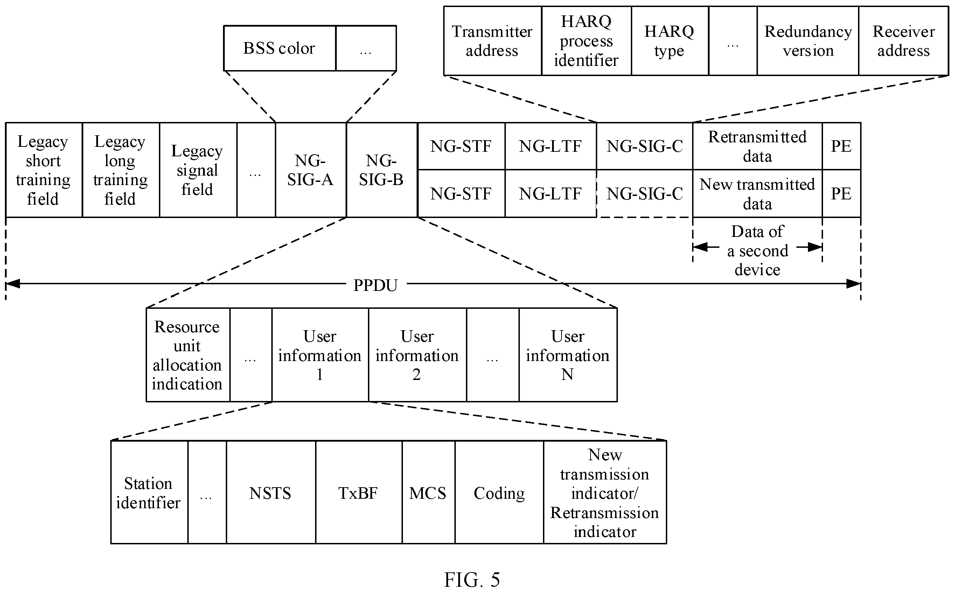

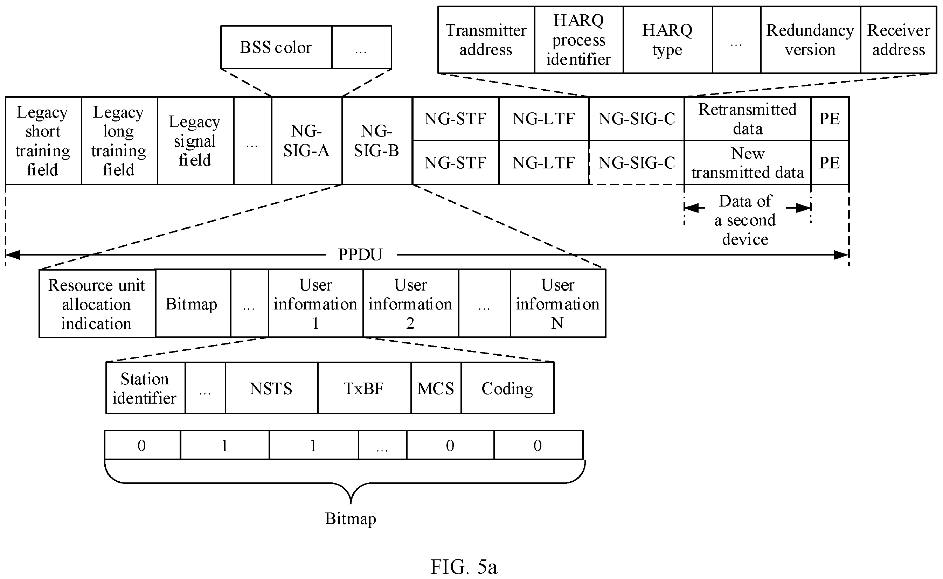

In a possible design, the at least one transmission indicator and the data of the at least one second device are both carried on a first PPDU. In other words, a HARQ process of multi-user data transmission is implemented through one PPDU. In the possible design, the at least one transmission indicator is carried in a signaling field of the first PPDU, and the data of the second device is carried in a data field of the first PPDU; or the transmission indicator of the second device is carried on a first resource unit, and the data of the second device is carried on a second resource unit; or the transmission indicator is carried on one MPDU included in the first PPDU, and the data of the second device is carried on another MPDU included in the first PPDU. Specifically, for the possible design, refer to FIG. 5 to FIG. 8.

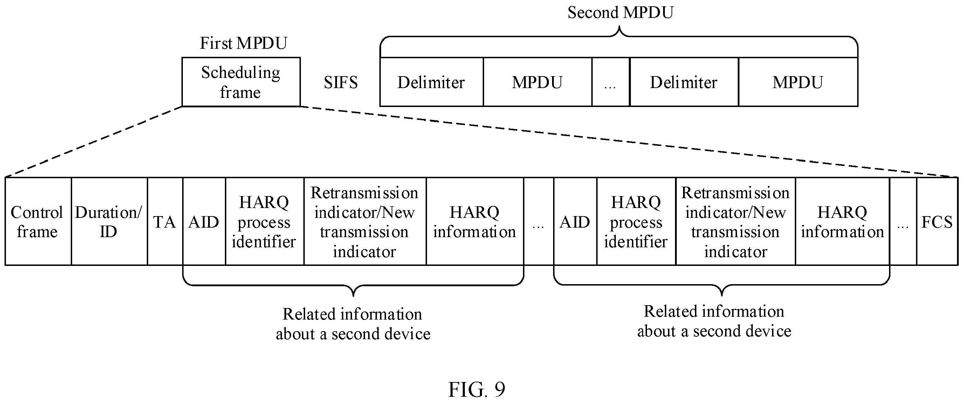

In another possible design, the at least one transmission indicator is carried on a first PPDU, the data of the at least one second device is carried on a second PPDU, and the first PPDU is sent before the second PPDU is sent, that is, a PPDU is sent in advance to indicate that subsequently sent data of the second device is new transmitted data or retransmitted data. The first PPDU and the second PPDU may be separated by an interframe space of a specific length. For example, the first PPDU and the second PPDU may be separated by a short inter-frame space (Short Inter-frame Space, SIFS) time, or may be separated by any other interframe space. This is not limited. Specifically, for the possible design, refer to FIG. 9.

In the foregoing possible design, the data of the second device is carried on a resource unit (Resource Unit, RU) and sent to the second device. The RU may carry only the data of the second device, or may carry data of a plurality of second devices other than the second device. This is not limited. When the RU carries data of only one second device, that the at least one transmission indicator is in a one-to-one correspondence with the data of the at least one second device may be replaced with that the at least one transmission indicator is corresponding to at least one RU, the at least one RU is in a one-to-one correspondence with the at least one second device, and each RU is used to carry the data of the second device. The following uses an example in which one RU carries data of one second device for description.

Further, for each second device, if the second device successfully receives the data sent by the first device, the second device may perform step 403; or if the second device fails to receive the data sent by the first device, the second device may perform step 403, or may not send an acknowledgment message to the first device.

Optionally, the method further includes step 403: The second device sends an acknowledgment message to the first device.

The acknowledgment message is used to indicate whether the second device successfully receives the data sent by the first device. In an example, one bit may be used to indicate whether the second device successfully receives the data sent by the first device. For example, "0" may be used to indicate that the second device fails to receive the data sent by the first device, and "1" may be used to indicate that the second device successfully receives the data sent by the first device. When the second device fails to receive the data, the second device may further not feed back the acknowledgment message to the first device. It may be understood that meanings indicated by "0" and "1" may be replaced.

Further, if the second device determines, based on the transmission indicator, that the data of the second device sent by the first device is new transmitted data, and the data is not correctly received, the second device stores the received data. If the second device determines, based on the transmission indicator, that the data of the second device sent by the first device is retransmitted data, when sending the data of the second device to the second device in step 402, the first device further sends HARQ information, so that the second device performs, based on the HARQ information, combining processing on the currently received data and data previously sent by the first device to the second device.

In this application, the HARQ information is information required by the second device for combining data, and needs to be modulated by using a relatively low MCS during transmission. In other words, the HARQ information needs to be transmitted robustly. The HARQ information may include a transmitter address, and may further include one or more information of a HARQ process identifier (Process ID), a HARQ type (Type), a redundancy version (Redundancy Version, RV), a receiver address, or other information. The transmitter address is used to identify a device that sends data to the second device, and may be any one of the following information: a basic service set identifier (Basic Service Set Identifier, BSSID), a BSS color (Color), a media access control (Media Access Control, MAC) address, an internet protocol (Internet Protocol, IP) address, an association identifier (Association Identifier, AID), an additional set access point identifier (Access Point Identifier, APID), a part of the AID, or the like. The HARQ process identifier is used to identify a specific HARQ process used for transmitting the data of the second device. The HARQ type may include a chase combining (Chase Combining, CC) type and an incremental redundancy (Incremental Redundancy, IR) type. The RV may be used to indicate a specific version in a plurality of redundancy versions of the retransmitted data, and is used to identify different check information. The receiver address is used to identify a device that receives data sent by the first device, and may be any information of a BSSID, a BSS Color, a MAC address, an IP address, or an AID.

The foregoing combination processing process may be as follows:
The second device determines, by using the transmitter address, that the received data and previously transmitted data are from a same transmitter, and determines, by using the receiver address, that a destination station of the retransmitted data is the second device, to determine to perform HARQ combination.

The second device identifies a type of the HARQ based on the HARQ type. If the HARQ type is the CC, the second device combines the retransmitted data with previously received new transmitted data and/or retransmitted data. For example, the second device may combine original information bits, or may combine a log-likelihood ratio (Log-Likelihood ratio, LLR) before decoding with a currently received LLR, and then decodes a combined LLR value. Particularly, if the first device retransmits only some data of the second device, the second device may combine original information bits or LLRs only for some retransmitted data.

If the HARQ type is a type of retransmitting only some check bits in the IR, the second device combines original information with additional check bit information based on the RV indication, and performs decoding again, where the additional check bit information is sent to the second device when the first device retransmits the data to the second device, and the RV identifies the additional check bit information that is retransmitted.

If the HARQ type is a type of simultaneously retransmitting system bits and some check bits in the IR, the second device combines, based on the RV indication, original information with additional system bits and additional check bit information, and performs decoding again, where the system bits and the additional check bit information are sent to the second device when the first device retransmits the data to the second device, and the RV identifies the additional check bit information that is retransmitted.

According to the method shown in FIG. 4, the first device may simultaneously send, to a plurality of second devices, a plurality of transmission indicators that are in a one-to-one correspondence with data of the plurality of second devices and the data of the plurality of second devices, so that the plurality of second devices learn, based on the transmission indicators corresponding to the data of the plurality of second devices, that data sent by the first device is new transmitted data or retransmitted data, store new transmitted data that is not correctly received, and perform HARQ combination on the retransmitted data. In this way, a HARQ process of multi-user data transmission can be implemented.

In a first scenario of the embodiment shown in FIG. 4, the first device sends a first PPDU to the at least one second device, where the first PPDU includes the at least one transmission indicator and the data of the at least one second device, that is, the at least one transmission indicator and the data of the at least one second device are carried on the first PPDU, the first PPDU may include a signaling field, and the signaling field may include the at least one transmission indicator. When a transmission indicator of the second device is used to indicate that the data of the second device is retransmitted data, the first PPDU may further include HARQ information. For descriptions of the HARQ information, refer to the foregoing descriptions. Details are not described again.

In a possible design, the signaling field includes at least one piece of user information, the at least one piece of user information is in a one-to-one correspondence with the at least one second device, user information of the second device carries the transmission indicator of the second device, and the HARQ information is carried on a resource unit of the second device.

Specifically, the signaling field may be a signaling field A or a signaling field B in the first PPDU, and the resource unit of the second device carries a signaling field C, where the signaling field C carries the HARQ information. The resource unit of the second device may be preconfigured for the second device, and the signaling field may further carry a resource unit allocation indication. The resource unit allocation indication may be used to indicate an RU allocated to a user, and the resource unit allocation indication is used to indicate the resource unit of the second device.

The signaling field A, the signaling field B, the signaling field C, and the like in this embodiment of this application may have different names in different WLAN standards. In this embodiment of this application, for ease of description, the signaling field A is referred to as next-generation signaling A (Next-Generation Signal A, NG-SIG-A), the signaling field B is referred to as an NG-SIG-B, and the signaling field C is referred to as an NG-SIG-C. It may be understood that the signaling field may have another name, and is not limited to the name in the embodiments of this application.

It should be noted that, in addition to the signaling field A, the signaling field B, and the signaling field C, the first PPDU may further include another field, for example, a legacy short training field (Legacy Short Training Field, L-STF), a legacy long training field (Legacy Long Training Field, L-LTF), or a legacy signal field (Legacy Signal Field, L-SIG). In addition, in addition to the transmission indicator, the user information may further include one or more of the following information: a station identifier, a number of space-time streams (Number of Space-Time Streams, NSTS), a transmit beamforming (Transmit Beamforming, TxBF) indication, a modulation and coding scheme (Modulation and Coding Scheme, MCS), coding, or other information. In addition to the signaling field C, the resource unit of the second device may further include fields such as a short training field, a long training field, and a packet extension (Packet Extension, PE) field. For ease of description in this embodiment of this application, the short training field is referred to as an NG-STF, and the long training field may be referred to as an NG-LTF. It may be understood that there may be another name. This is not specifically limited in this embodiment of this application.

For example, FIG. 5 is a schematic diagram of a PPDU format according to an embodiment of this application. A PPDU shown in FIG. 5 includes a legacy short training field, a legacy long sequence field, a legacy signal field, an NG-SIG-A, an NG-SIG-B, and an NG-STF, an NG-LTF, an NG-SIG-C, data (retransmitted data or new transmitted data) of the second device, and a PE that are carried on a resource unit of the second device. The legacy short training field, the legacy long sequence field, and the legacy signal field are used for timing, synchronization, channel estimation required for obtaining a signaling field, backward compatibility, and the like. The NG-SIG-A carries a basic service set (Basic Service Set, BBS) color (Color), and the BBS color is used by a receive end to identify whether a transmit end and the receive end are in a same serving cell. The NG-SIG-B carries a resource unit allocation indication and at least one piece of user information. Each piece of user information includes a transmission indicator (a new transmission indicator/a retransmission indicator), a station identifier, an NSTS, a TxBF indication, an MCS, and coding. The NG-STF and the NG-LTF that are carried on the resource unit of the second device are respectively used for automatic gain control and channel estimation of subsequent data. The NG-SIG-C carries HARQ information, and the PE is configured to prolong a processing time of a receiver.

It should be noted that when the data of the second device is new transmitted data, the resource unit of the second device may not carry the NG-SIG-C field, or may carry the NG-SIG-C field, to ensure that a field carried on the resource unit of the second device during new data transmission is the same as a field carried on the resource unit of the second device during data retransmission, so that physical layer formats can be unified. Therefore, when the second device receives the data, receiving processes for data packets of different structures does not need to be separately designed, thereby simplifying a receiving process.

Different from that the foregoing transmission indicator of each second device corresponds to the user information carried in the second device, in an alternative solution, the signaling field includes a bitmap, the bitmap includes at least one bit, and the at least one bit is in a one-to-one correspondence with the at least one transmission indicator. In other words, that the data of the at least one second device is new transmitted data or retransmitted data is indicated by using the bitmap in a centralized manner. A field that carries the bitmap in the alternative solution may be a common field of the NG-SIG-B. The bitmap includes the at least one bit, and the at least one bit is in a one-to-one correspondence with the data of the at least one second device, and is used to indicate that the data of the second device is retransmitted data or new transmitted data. For example, when a value of the bit is "0", it indicates that the data of the second device is the new transmitted data, and when a value of the bit is "1", it indicates that the data of the second device is the retransmitted data. For example, data of four users (from a user 1 to a user 4) is in a one-to-one correspondence with four bits in the bitmap, and if data of the user 1 is new transmitted data, and data of the user 2, the user 3, and the user 4 is retransmitted data, the bitmap is 0111.

For example, FIG. 5a is a schematic diagram of another PPDU format according to an embodiment of this application. Different from that in FIG. 5, an NG-SIG-B shown in FIG. 5a includes a bitmap, the bitmap includes a plurality of bits, and each bit may be 0 or 1, to indicate that data of the second device corresponding to the bit is new transmitted data or retransmitted data. In this case, it can be learned from FIG. 5a that each piece of user information no longer carries a transmission indicator. In addition to the bitmap, other information included in a PPDU shown in FIG. 5a is the same as that shown in FIG. 5. Details are not described again.

Optionally, in the first scenario of the embodiment shown in FIG. 4, a length of the NG-SIG-C carrying the HARQ information may be a fixed quantity of information bits. The length of the NG-SIG-C may alternatively be determined based on a size of the resource unit of the second device. For example, HARQ information carried on a larger resource unit replicates HARQ information carried on a smallest resource unit, to ensure that a quantity of symbols occupied by the HARQ information is fixed, and a quantity of symbols transmitted in a same period of time is fixed. Alternatively, the user information of the second device may include a length indication, and the length indication is used to indicate the length of the NG-SIG-C carrying the HARQ information.

According to the PPDU described in the first scenario, the first device may simultaneously transmit data to a plurality of second devices by using a HARQ technology. In addition, HARQ information carrying the transmitter address and the data of the second device are not carried in a same field. Because the HARQ information carrying the transmitter address needs to be transmitted robustly (for example, modulated by using a relatively low MCS), but the data of the second device may use a relatively high MCS, which is different from the MCS used for transmitting the HARQ information, when the robust HARQ information and the data of the second device are separately carried in different fields and sent to the second device, the field that carries the data may be modulated by using only one MCS, so that when receiving the data in the field that carries the data, the second device receives the data by using only one MCS. Different from that in the prior art shown in FIG. 2, to be specific, that the HARQ information and the data are received in the data field by using two different MCSs, this reduces complexity of receiving the carried data by a receive end.

In a second scenario of the embodiment shown in FIG. 4, the first device sends a first PPDU to the at least one second device, where the first PPDU includes the at least one transmission indicator and the data of the at least one second device, that is, the at least one transmission indicator and the data of the at least one second device are carried on the first PPDU, the first PPDU may include a signaling field, and the signaling field may include the at least one transmission indicator. When a transmission indicator of the second device is used to indicate that the data of the second device is retransmitted data, the first PPDU may further include HARQ information.

For related descriptions of the HARQ information, refer to the foregoing descriptions. Details are not described again. In the second scenario of the embodiment shown in FIG. 4, the HARQ information may be carried in user information of the second device, instead of being carried in a signaling field C (for example, an NG-SIG-C).

In a data retransmission process, an MCS, a coding scheme, and other corresponding physical layer parameters (such as an NSTS and a TxBF) are the same as those used in a new data transmission. Optionally, during data retransmission, information such as an NSTS, a TxBF, an MCS, and coding does not need to be carried, and instead, a field that carries the information is used to carry the HARQ information. For example, the user information of the second device may further include first information, and when the transmission indicator is used to indicate that the data of the second device is new transmitted data, the first information is information (for example, information such as an NSTS, a TxBF, an MCS, and coding) used to indicate a transmission format of the new transmitted data; or when the transmission indicator is used to indicate that the data of the second device is retransmitted data, the first information is HARQ information required by the second device for combining data, In other words, the HARQ information is indicated in a manner of reusing original field information.

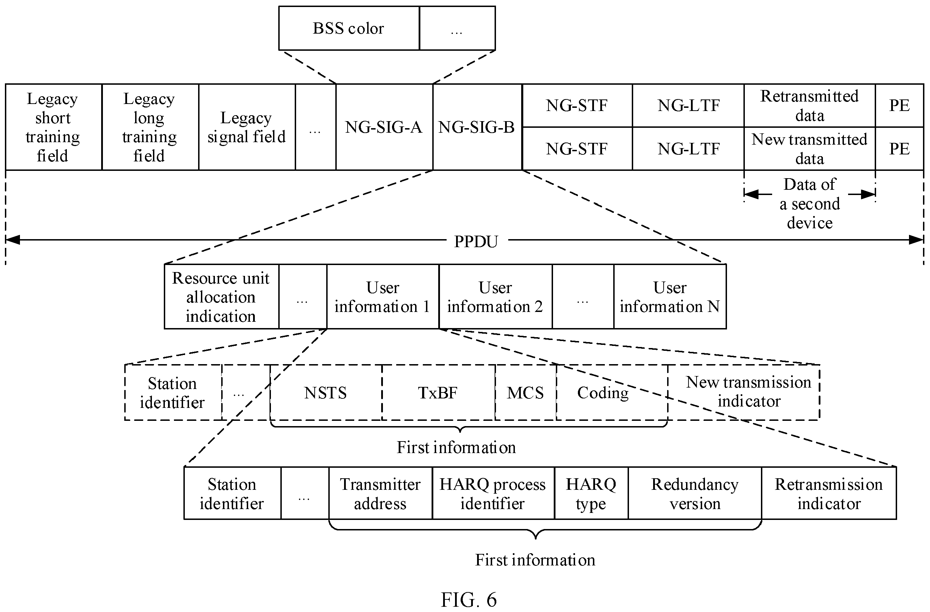

For example, FIG. 6 is a schematic diagram of still another PPDU format according to an embodiment of this application. In user information 1 shown in FIG. 6, if the user information 1 carries a new transmission indicator, a field in the user information 1 further carries first information (for example, information used to indicate a transmission format of the new transmitted data, such as an NSTS, a TxBF, an MCS, and coding). If the user information 1 carries a retransmission indicator, first information originally carried in a field that is in the user information and that is originally used to carry information such as an NSTS, a TxBF, an MCS, and coding is HARQ information, and the user information does not carry the information used to indicate a transmission format of new transmitted data, such as the NSTS, the TxBF, the MCS, and the coding. For related descriptions of another field included in FIG. 6, refer to the descriptions in FIG. 5. Details are not described again.
According to the PPDU described in the second scenario, the first device may simultaneously transmit data to a plurality of second devices by using a HARQ technology. In addition, robust HARQ information and the data of the second device are separately carried in different fields, thereby reducing complexity of receiving the carried data by a receive end. In addition, when HARQ retransmission is performed, the information used to indicate the transmission format of the new transmitted data during new data transmission is used as the HARQ information required by the second device for combining the data during data retransmission. In other words, information carried in the user information of the second device indicates the HARQ information through escaping, and no additional information bit is required to indicate the HARQ information, thereby reducing signaling overheads. In addition, a field carried on the resource unit of the second device during new data transmission is the same as a field carried on the resource unit of the second device during data retransmission, so that physical layer formats can be unified. Therefore, when the second device receives the data, receiving processes for data packets of different structures does not need to be separately designed, thereby simplifying a receiving process.

In a third scenario of the embodiment shown in FIG. 4, the first device sends a first PPDU to the at least one second device, where the first PPDU includes the at least one transmission indicator and the data of the at least one second device, that is, the at least one transmission indicator and the data of the at least one second device are carried on the first PPDU. A transmission indicator of the second device is carried on a first resource unit, data of the second device is carried on a second resource unit, and the first resource unit and the second resource unit are resource units of the second device; and when the transmission indicator of the second device is used to indicate that the data of the second device is retransmitted data, the first resource unit further carries HARQ information. That is, a structure of a plurality of resource units is used, and a resource unit that is sent first is used to indicate that data carried on a subsequent resource unit is new transmitted data or retransmitted data.

The first resource unit and the second resource unit may be different resource units in time domain, or may be different resource units in frequency domain, or may be different resource units in both time domain and frequency domain. This is not limited in this application.

The first resource unit and the second resource unit may be preconfigured for the second device, or a piece of indication information may be carried in a signaling field in the first PPDU, where the indication information is used to indicate that the resource units of the second device include the first resource unit and the second resource unit. The first resource unit may be a resource unit sent first, and the second resource unit may be a resource unit sent later. There may be one or more other fields (for example, an NG-STF field and an NG-LTF field) between a data field carried on the first resource unit and a data field carried on the second resource unit.

Each resource unit may carry a plurality of MPDUs. For example, the first resource unit may carry a plurality of MPDUs, and any one of the plurality of MPDUs may carry the transmission indicator of the second device. The second resource unit may also carry a plurality of MPDUs, and the plurality of MPDUs of the second device carry the data of the second device.

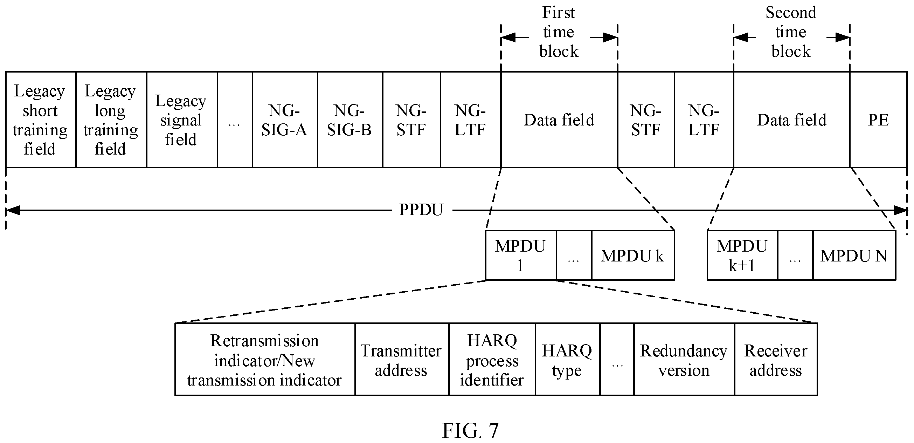

For example, the resource unit is a time block. FIG. 7 is a schematic diagram of yet another PPDU format according to an embodiment of this application. As shown in FIG. 7, the PPDU may include a first time block and a second time block, where the first time block carries an MPDU 1 to an MPDU k, the MPDU 1 carries information such as a transmission indicator (a new transmission indicator/a retransmission indicator), and may further carry HARQ information when the transmission indicator is a retransmission indicator. The second time block may carry an MPDU k+1 to an MPDU N, where the MPDUs may carry data of the second device. For related descriptions of another field included in FIG. 7, refer to the descriptions in FIG. 5. Details are not described again.

According to the PPDU described in the third scenario, the first device may indicate, by using indication information carried on the first resource unit, that the data sent on the second resource unit is the retransmitted data or new transmitted data, therefore, there is no need to change a signaling field specified in an existing protocol and there is a relatively slight change to a PPDU format.

In a fourth scenario of the embodiment shown in FIG. 4, the first device sends a first PPDU to the at least one second device, where the first PPDU includes the at least one transmission indicator and the data of the at least one second device, and the first PPDU includes a plurality of MPDUs (which may be referred to as an aggregated A-MPDU). A first MPDU in the plurality of MPDUs is configured to carry a transmission indicator of the second device, and an MPDU other than the first MPDU in the plurality of MPDUs is configured to carry data of the second device; and when the transmission indicator of the second device is used to indicate that the data of the second device is retransmitted data, the first MPDU further carries HARQ information.

The first MPDU may be any one of the plurality of MPDUs. In an example, the first MPDU may be a first MPDU in the plurality of MPDUs.

In a possible design, the first MPDU is a quality of service null frame (Quality of Service Null, QoS Null) and does not have a frame body. The first MPDU carries an A1 field, an A2 field, and a high throughput control (High Throughput Control, HT) field, where the A1 field carries a transmitter address, the A2 field carries a receiver address, and the HT control field carries a transmission indicator and HARQ information other than the transmitter address and the receiver address. In addition, the first MPDU may further carry other information, such as a control frame, a duration identifier (Duration ID), an A3 field, an A4 field, and a frame check sequence (Frame Check Sequence, FCS). For the information, refer to existing descriptions. Details are not described again. In the possible design, the first MPDU further includes a transmission indicator, and the transmission indicator is used to indicate that all data sent by the first device to the second device is new transmitted data or retransmitted data.

In another possible design, the first MPDU is a management frame that has a frame body or a control frame, and may further include the frame body in addition to a field included in a quality of service null frame. In still another possible design, the MPDU other than the first MPDU in the plurality of MPDUs may be carried on at least one HARQ block, the transmission indicator of the second device may be carried in a frame body, the frame body includes at least one HARQ block identifier, and the at least one HARQ block identifier is used to indicate a HARQ block carrying new transmitted data or a HARQ block carrying retransmitted data in the at least one HARQ block. The HARQ block identifier may be a number of the HARQ block or the like. For example, the data of the second device is carried on a HARQ block 1 to a HARQ block 5, and if the data in the HARQ block 1 is new transmitted data, the data in a HARQ block 2 to a HARQ block 4 is retransmitted data, and the data in the HARQ block 5 is new transmitted data, the frame body in the first MPDU may carry the HARQ blocks 1 and 5, to indicate that data in the HARQ block 1 and the HARQ block 5 is the new transmitted data; or the frame body in the first MPDU carries the HARQ blocks 2, 3, and 4, to indicate that data in the HARQ block 2 to the HARQ block 5 is the retransmitted data.

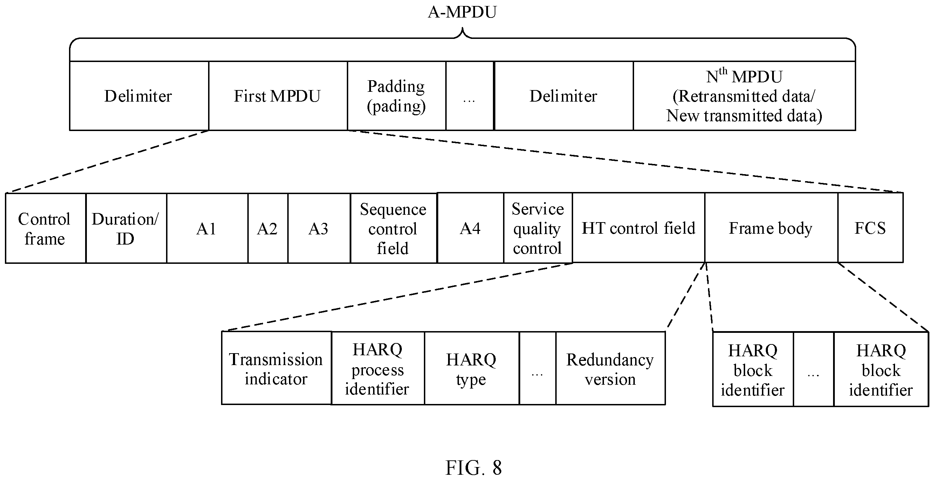

For example, FIG. 8 is a schematic diagram of still yet another PPDU format according to an embodiment of this application. As shown in FIG. 8, an A-MPDU includes a plurality of MPDUs, different MPDUs are separated by delimiters, and a first MPDU includes a control frame, a duration ID, an A1 field, an A2 field, an A3 field, an A4 field, an HT control field, a frame body, an FCS, and the like. The HT control field includes a transmission indicator, and may further include HARQ information when the transmission indicator is used to indicate that the data of the second device is retransmitted data. The frame body includes a plurality of HARQ identifiers. An N^{th} MPDU may carry the data (new transmitted data/retransmitted data) of the second device.

According to the PPDU described in the fourth scenario, the first device may indicate, through an MPDU in the A-MPDU, that data carried on another MPDU is new transmitted data or retransmitted data.

In a fifth scenario of the embodiment shown in FIG. 4, the first device sends a first PPDU to the at least one second device, where the first PPDU includes the at least one transmission indicator; and sends a second PPDU to the at least one second device, where the second PPDU includes the data of the at least one second device. In other words, the at least one transmission indicator is carried on the first PPDU, and the at least one piece of second data is carried on the second PPDU. The first PPDU and the second PPDU may be separated by an interframe space of a specific length. For example, the first PPDU and the second PPDU may be separated by an SIFS time or an interframe space of any other length. This is not limited.

The first PPDU may include a signaling field, the signaling field may include at least one piece of user information, the at least one piece of user information is in a one-to-one correspondence with the at least one second device, and user information of the second device carries a transmission indicator of the second device. Specifically, for a manner of carrying the at least one transmission indicator, refer to FIG. 5. Details are not described again. Alternatively, the first PPDU includes a signaling field, the signaling field includes a bitmap, the bitmap includes at least one bit, and the at least one bit is in a one-to-one correspondence with the at least one transmission indicator. Specifically, for the carrying manner, refer to FIG. 5a. Details are not described again.

When the transmission indicator of the second device is used to indicate that the data of the second device is retransmitted data, the user information of the second device further carries HARQ information. Specifically, for a manner of carrying the HARQ information, refer to FIG. 6. Details are not described again. Alternatively, a resource unit of the second device carries HARQ information. For example, the second PPDU includes a plurality of RUs, and each RU carries the data of the second device and the HARQ information. Specifically, for a manner in which the HARQ information is carried on the resource unit of the second device, refer to FIG. 5 or FIG. 5a. Details are not described again.

The data of the at least one second device may be carried on the second PPDU in an orthogonal frequency division multiple access (Orthogonal Frequency Division Multiple Access, OFDMA) manner, or may be carried on the second PPDU in a multi-user multiple-input multiple-output (Multi-User Multiple-Input Multiple-Output, MU-MIMO) manner, or may be carried on the second PPDU in an A-MPDU manner, in other words, the data of the one or more second devices is carried on a plurality of MPDUs.

For example, FIG. 9 is a schematic diagram of a data packet format according to an embodiment of this application. As shown in FIG. 9, the data packet format includes a first PPDU and a second PPDU, an interval between the first PPDU and the second PPDU is an SIFS, the first PPDU carries a first MPDU, and the first MPDU is a scheduling frame and includes a control frame, a duration ID, a transmitter address (Trasmitter Address, TA), related information about one or more second devices, an FCS, and the like, where the related information about the second device includes an association identifier (Association ID, AID) of a station (station identifier for short), a HARQ process identifier, a retransmission indicator/new transmission indicator, HARQ information (such as a transmitter address, an RV, and a HARQ type), and the like. It should be noted that the HARQ information is carried when the related information about the second device includes a retransmission indicator. The second PPDU includes data of the one or more second devices. As shown in FIG. 9, the second PPDU includes a plurality of MPDUs, and the plurality of MPDUs carry the data of the one or more second devices.

It may be understood that the first MPDU may also be referred to as a control frame, a management frame, a configuration frame, or the like. This is not specifically limited in this embodiment of this application.

According to the PPDU described in the fifth scenario, before transmitting the data, the first device separately sends a scheduling frame, and indicates, by using the scheduling frame, that subsequently sent data is new transmitted data or retransmitted data, to transmit the data to a plurality of second devices. In addition, the robust HARQ information and the data of the second device are separately carried in different fields, so that the field that carries the data can be modulated by using only one MCS, and when receiving the data in the field that carries the data, the second device receives the data by using only one MCS. Different from that in the prior art shown in FIG. 2, to be specific, that the HARQ information and the data are received in the data field by using two different MCSs, this reduces complexity of receiving the carried data by a receive end. In addition, a field carried on the resource unit of the second device during new data transmission is the same as a field carried on the resource unit of the second device during data retransmission, so that physical layer formats can be unified. Therefore, when the second device receives the data, receiving processes for data packets of different structures does not need to be separately designed, thereby simplifying a receiving process.

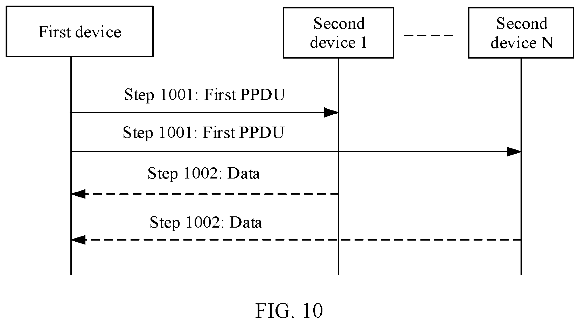

In an inverse process in which the first device sends the data to the plurality of second devices, the first device may further receive, based on a trigger (Trigger) mechanism, data uploaded by the plurality of second devices. For details, refer to FIG. 10.

FIG. 10 is a flowchart of another HARQ technology-based communication method according to an embodiment of this application. As shown in FIG. 10, the method may include the following steps.

Step 1001: A first device sends a first PPDU to at least one second device.

The first PPDU may carry a trigger frame, the first PPDU may include at least one transmission indicator, where the at least one transmission indicator is used to indicate the at least one second device to retransmit data or transmit new data to the first device, and the at least one transmission indicator is in a one-to-one correspondence with the at least one second device. The transmission indicator is used to indicate the second device to retransmit the data or transmit new data to the first device. When the transmission indicator is used to indicate the second device to retransmit the data to the first device, the transmission indicator may be referred to as a retransmission indicator; and when the transmission indicator is used to indicate the second device to transmit new data to the first device, the transmission indicator may be referred to as a new transmission indicator.

In a possible design, the first PPDU includes at least one piece of user information, the at least one piece of user information is carried in a data field or a signaling field (for example, an NG-SIG-A or NG-SIG-B) of the first PPDU, the at least one piece of user information is in a one-to-one correspondence with the at least one second device, and user information of the second device carries a transmission indicator of the second device. Specifically, for the possible design, refer to the design of the location of the at least one transmission indicator in FIG. 5 or FIG. 6. Details are not described again.

In another possible design, the first PPDU includes a bitmap, the bitmap is carried in a data field or a signaling field (for example, an NG-SIG-A or an NG-SIG-B) of the first PPDU, the bitmap includes at least one bit, and the at least one bit is in a one-to-one correspondence with the at least one transmission indicator. In other words, that data uploaded by the at least one second device is new transmitted data or retransmitted data is indicated by using the bitmap in a centralized manner. Specifically, for the possible design, refer to the design of the location of the at least one transmission indicator in FIG. 5a. Details are not described again.

In the foregoing possible design, when the transmission indicator is used to indicate the second device to retransmit the data to the first device, the user information of the second device further carries HARQ information. For related descriptions of the HARQ information, refer to the foregoing descriptions. Details are not described again.

Further, after the second device receives the first PPDU sent by the first device, the second device may upload the data to the first device based on the transmission indicator. For example, if the transmission indicator indicates the second device to retransmit the data, the second device retransmits the data to the first device based on the HARQ information; or if the transmission indicator indicates the second device to transmit new data, the second device transmits new data to the first device.

Step 1002: The first device receives the data sent by the at least one second device.

The data sent by the second device may be carried on a second PPDU, and the second PPDU and the first PPDU may be separated by an interframe space of a specific length. For example, the first PPDU and the second PPDU may be separated by an SIFS time, or may be separated by an interframe interval time of any length. This is not limited. In other words, step 1002 may be: The first device receives a second PPDU, where the second PPDU includes the data sent by the second device.

For example, FIG. 11 is a schematic diagram of another data packet format according to an embodiment of this application. As shown in FIG. 11, the data packet format includes a first PPDU and a second PPDU. The first PPDU carries a trigger frame (Trigger frame), where the trigger frame is a MAC frame and is carried in a data field of the first PPDU; and the second PPDU carries uplink data sent by a second device, and a time point at which the first device sends the trigger frame and a time point at which the first device receives the uplink data are separated by an SIFS. The trigger frame is carried in the first PPDU, and includes a control frame, a duration ID, a receiver address (Receiver Address, RA), a transmitter address (Trasmitter Address, TA), a plurality of pieces of user information, an FCS, and the like. Each piece of user information includes a transmission indicator and other information (such as a station identifier or a resource unit allocation indication). When the user information carries a retransmission indicator, the user information further includes HARQ information (for example, a HARQ process identifier, a HARQ type, or a redundancy version). It should be noted that when the user information carries a new transmission indicator, a field used to carry the HARQ information may be used as a reserved field, and does not need to be used as an indication.

Further, if the transmission indicator indicates the second device to retransmit the data, the first device combines the data currently sent by the second device and previously received data sent by the second device, and demodulates combined data. If the transmission indicator indicates the second device to transmit new data, the first device stores the data sent by the second device. For a process in which the first device combines the data currently sent by the second device with the data previously received from the second device, refer to the foregoing combination processing process. This is not limited.

According to the method shown in FIG. 11, the first device may first send, to one or more second devices, the PPDU carrying the transmission indicator, to trigger the one or more second devices to transmit new data/retransmit the data to the first device based on the transmission indicator, to implement a HARQ process of uplink multi-user data transmission.

The foregoing mainly describes the solutions provided in the embodiments of this application from a perspective of the interaction between the nodes. It may be understood that, to implement the foregoing functions, the nodes, for example, the first device and the second device, include corresponding hardware structures and/or software modules for performing the functions. A person skilled in the art should easily be aware that, in combination with the examples described in the embodiments disclosed in this specification, algorithm steps may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, the first device and the second device may be divided into functional modules based on the foregoing method examples. For example, each functional module may be obtained through division based on each corresponding function, or two or more functions may be integrated in one processing module. The integrated module may be implemented in a form of hardware, or may be implemented in a form of a software functional module. It should be noted that, in the embodiments of this application, the module division is an example, and is merely a logical function division. In actual implementation, another division manner may be used.

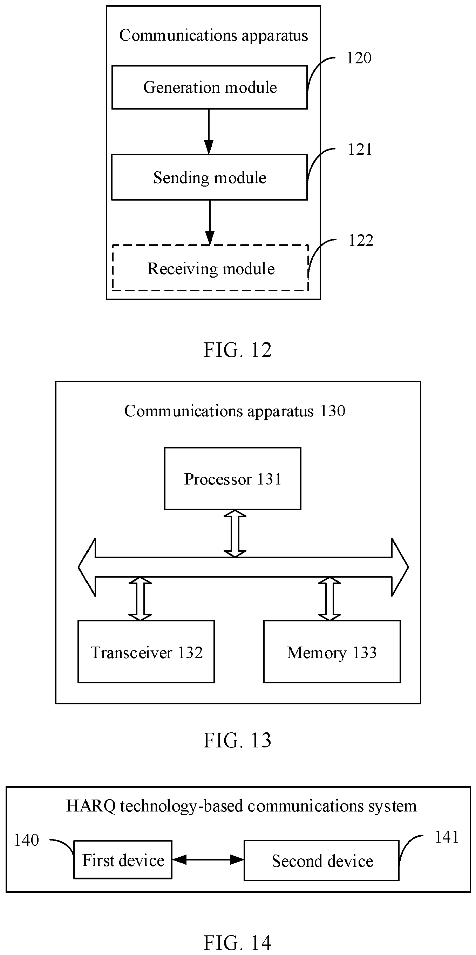

When each functional module is obtained through division based on each corresponding function, FIG. 12 is an example of a schematic composition diagram of a communications apparatus. The communications apparatus may be the first device, a chip or a system-on-a-chip in the first device, and the communications apparatus may be configured to perform a function of the first device in the foregoing embodiments. In an implementation, the communications apparatus shown in FIG. 12 includes a generation module 120 and a sending module 121.

The generation module 120 is configured to generate at least one transmission indicator used to indicate that data of at least one second device is retransmitted data or new transmitted data and the data of the at least one second device, where the at least one transmission indicator is in a one-to-one correspondence with the data of the at least one second device. For example, the generation module 120 supports the communications apparatus in performing step 401. The generation module 120 may be implemented by a processor 131 in FIG. 13.

The sending module 121 is configured to send the at least one transmission indicator and the data of the at least one second device to the at least one second device. For example, the sending module 121 supports the communications apparatus in performing step 402. The sending module 121 may be implemented by a transceiver 132 in FIG. 13.

Further, as shown in FIG. 12, the first device may further include a receiving module 122.

The receiving module 122 may be configured to receive an acknowledgment message sent by the second device. For example, the receiving module 122 supports the communications apparatus in performing step 403.

Further, in an inverse process of delivering the data by the communications apparatus, the sending module 121 is further configured to send, to the at least one second device, a first PPDU including the at least one transmission indicator that is used to indicate the at least one second device to retransmit data or transmit new data to the first device. For example, the sending module 121 supports the communications apparatus in performing step 1001. The sending module 121 may be implemented by the transceiver 132 in FIG. 13.

The receiving module 122 is configured to receive the data sent by the at least one second device, where the at least one transmission indicator is in a one-to-one correspondence with the at least one second device. For example, the receiving module 122 supports the communications apparatus in performing step 1002.

It should be noted that all related content of the steps in the foregoing method embodiments may be cited in function descriptions of corresponding functional modules. Details are not described herein. The communications apparatus provided in this embodiment of this application is configured to perform a function of the first device in the foregoing HARQ technology-based communication method, and therefore can achieve a same effect as that in the foregoing HARQ technology-based communication method.

When an integrated unit is used, FIG. 13 is a schematic composition diagram of still another communications apparatus according to an embodiment of this application. The communications apparatus 130 may include a transceiver 132 and a processor 131. The processor 131 may be configured to support the first device in performing a corresponding function in the foregoing method; and the transceiver 132 may be configured to: support communication between the first device and the second device, and receive or send corresponding information or an instruction in the foregoing method. Optionally, the communications apparatus 130 further includes a memory 133.

In an example, the processor 131 may generate data and information, and the transceiver 132, for example, an antenna, may send and receive the data or the information. For example, the processor 131 may generate at least one transmission indicator used to indicate that data of at least one second device is retransmitted data or new transmitted data and the data of the at least one second device, and send the at least one transmission indicator and the data of the at least one second device to the at least one second device through the transceiver 132. In another example, the processor 131 is further configured to: send, to at least one second device through the transceiver 132, a first PPDU including at least one transmission indicator that is used to indicate the at least one second device to retransmit data or transmit new data to the first device, and receive, through the transceiver 132, data sent by the at least one second device.

Optionally, if the communications apparatus 130 is a chip in the first device, the chip includes a processing module and a transceiver module. The transceiver module may be, for example, an input/output interface, a pin, or a circuit on the chip. The processing module may execute a computer-executable instruction stored in a storage unit.

Optionally, the storage unit is a storage unit in the chip, for example, a register or a cache. The storage unit may alternatively be a storage unit that is in the device and that is outside the chip, for example, a ROM, another type of static storage device that can store static information and an instruction, or a RAM.

It should be understood that the processor 131 in this embodiment of this application may be an integrated circuit chip and has a signal processing capability. In an implementation process, the steps in the foregoing method embodiment may be completed by using a hardware integrated logic circuit in the processor or by using an instruction in a form of software. The processor may be a general purpose processor, a DSP, an application-specific integrated circuit (application specific integrated circuit, ASIC), an FPGA or another programmable logic device, a discrete gate or transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, a register, or the like. The storage medium is located in the memory 133, and the processor reads information in the memory 133 and completes the steps in the foregoing methods in combination with hardware of the processor.

It may be understood that the memory 133 in this embodiment of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM and is used as an external cache. According to a description that is used as an example instead of a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus RAM, DR RAM). It should be noted that the memory in the system and method described in this specification includes but is not limited to these memories and any memory of another proper type.

An embodiment of this application further provides a computer storage medium, and the computer storage medium may store a program instruction for indicating any one of the foregoing methods.

Optionally, the computer storage medium may be specifically the memory 133.

An embodiment of this application further provides a chip system. The chip system includes a processor, configured to support a distributed unit, a centralized unit, a first device, and a second device in implementing a function in the foregoing embodiments, for example, generating or processing data and/or information in the foregoing methods. In a possible design, the chip system further includes a memory. The memory is configured to store program instructions and data that are necessary for the distributed unit, the centralized unit, the first device and the second device. The chip system may include a chip, or may include a chip and another discrete device.

FIG. 14 is a schematic composition diagram of a HARQ technology-based communications system according to an embodiment of this application. As shown in FIG. 14, the HARQ technology-based communications system may include a first device 140 and a second device 141.

The first device 140 may be the communications apparatus shown in FIG. 12 or FIG. 13, and is configured to perform a function of the first device in the foregoing method embodiments. Details are not described again.

Functional entities in the HARQ technology-based communications system provided in this embodiment of this application may interact with each other to perform the following processes: generating, by the first device 140, at least one transmission indicator and data of at least one second device 141, where the at least one transmission indicator is used to indicate that the data of the at least one second device 141 is retransmitted data or new transmitted data, and the at least one transmission indicator is in a one-to-one correspondence with the data of the at least one second device 141; and sending, by the first device 140, the at least one transmission indicator and the data of the at least one second device 141 to the at least one second device 141. In this way, the first device may simultaneously transmit, to one or more users, the data and the transmission indicator indicating that the data transmitted by the first device is the new transmitted data/retransmitted data, so that the second device performs HARQ processing on the received data based on the transmission indicator, to implement a HARQ process of multi-user data transmission.

Based on the foregoing descriptions of the implementations, a person skilled in the art may clearly understand that, for the purpose of convenient and brief description, division of the foregoing functional modules is merely used as an example for description. In actual application, the foregoing functions may be allocated to different functional modules for implementation based on a requirement, to be specific, an internal structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. The protection scope of this application shall be subject to the protection scope of the claims.

## Claims

1. A hybrid automatic repeat request, HARQ, technology-based communication method, wherein the method comprises:
generating (401), by a first device, at least one transmission indicator and data of at least one second device, wherein the at least one transmission indicator is used to indicate that the data of the at least one second device is retransmitted data or new transmitted data, and the at least one transmission indicator is in a one-to-one correspondence with the data of the at least one second device; and
sending (402), by the first device, the at least one transmission indicator and the data of the at least one second device to the at least one second device,
wherein the sending comprises:
sending, by the first device, a first physical layer protocol data unit, PPDU, to the at least one second device, wherein the first PPDU comprises the at least one transmission indicator and the data of the at least one second device,
wherein
the first PPDU comprises a plurality of media access control protocol data units, MPDUs, a first MPDU in the plurality of MPDUs is configured to carry a transmission indicator of the second device, and an MPDU other than the first MPDU in the plurality of MPDUs is configured to carry data of the second device, wherein the first MPDU carrying the at least one transmission indicator and the MPDU other than the first PDU carrying the data are sent using different modulation and coding schemes, MCSs; and
when the transmission indicator of the second device is used to indicate that the data of the second device is retransmitted data, the first MPDU further carries HARQ information required by the second device for combining the data, wherein the retransmitted data is sent using the same MCS of a new transmission.

2. The method according to claim 1, wherein
the MPDU other than the first MPDU in the plurality of MPDUs is carried on at least one HARQ block, the transmission indicator of the second device comprises at least one HARQ block identifier, and the at least one HARQ block identifier is used to indicate a HARQ block carrying new transmitted data or a HARQ block carrying retransmitted data in the at least one HARQ block.

3. A computer-readable storage medium, wherein the computer-readable storage medium stores an instruction, and when the instruction is run on a computer, the computer is enabled to perform the method according to claim 1 or 2.

4. A computer program product, wherein the computer program product comprises an instruction used to perform the method according to claim 1 or 2.

5. An apparatus, configured to implement the method according to claim 1 or 2.

## Patentansprüche

1. Hybridautomatische-Wiederholungsanforderungs, HARQ,-Technologie-basiertes Kommunikationsverfahren, wobei das Verfahren umfasst:
Erzeugen (401), durch eine erste Vorrichtung, mindestens eines Übertragungsanzeigers und Daten mindestens einer zweiten Vorrichtung, wobei der mindestens eine Übertragungsanzeiger verwendet wird, um anzuzeigen, dass die Daten der mindestens einen zweiten Vorrichtung erneut übertragene Daten oder neu übertragene Daten sind, und der mindestens eine Übertragungsanzeiger in einer Eins-zu-Eins-Entsprechung mit den Daten der mindestens einen zweiten Vorrichtung steht; und
Senden (402), durch die erste Vorrichtung, des mindestens einen Übertragungsanzeigers und der Daten der mindestens einen zweiten Vorrichtung an die mindestens eine zweite Vorrichtung,
wobei das Senden umfasst:
Senden, durch die erste Vorrichtung, einer ersten Bitübertragungsschichtprotokolldateneinheit, PPDU, an die mindestens eine zweite Vorrichtung, wobei die erste PPDU den mindestens einen Übertragungsanzeiger und die Daten der mindestens einen zweiten Vorrichtung umfasst,
wobei die erste PPDU eine Vielzahl von Medienzugriffssteuerungsprotokolldateneinheiten, MPDUs, umfasst, eine erste MPDU aus den Vielzahl von MPDUs konfiguriert ist, um einen Übertragungsanzeiger der zweiten Vorrichtung zu tragen, und eine andere MPDU als die erste MPDU aus der Vielzahl von MPDUs konfiguriert ist, um Daten der zweiten Vorrichtung zu tragen, wobei die erste MPDU, die den mindestens einen Übertragungsanzeiger trägt, und die andere MPDU als die erste PDU, die die Daten trägt, unter Verwendung unterschiedlicher Modulations- und Codierungsschemata, MCSs, gesendet werden; und
wenn der Übertragungsanzeiger der zweiten Vorrichtung verwendet wird, um anzuzeigen, dass die Daten der zweiten Vorrichtung erneut übertragene Daten sind, die erste MPDU ferner HARQ-Informationen trägt, die durch die zweiten Vorrichtung zum Kombinieren der Daten benötigt werden, wobei die erneut übertragenen Daten unter Verwendung des gleichen MCS einer neuen Übertragung gesendet werden.

2. Verfahren nach Anspruch 1, wobei
die andere MPDU als die erste MPDU in der Vielzahl von MPDUs auf mindestens einem HARQ-Block getragen wird, der Übertragungsanzeiger der zweiten Vorrichtung mindestens einen HARQ-Block-Identifizierer umfasst und der mindestens eine HARQ-Block-Identifizierer verwendet wird, um einen HARQ-Block, der neue übertragene Daten trägt, oder ein HARQ-Block anzuzeigen, der erneut übertragene Daten in dem mindestens einen HARQ-Block trägt.

3. Computerlesbares Speichermedium, wobei das computerlesbare Speichermedium eine Anweisung speichert, und wenn die Anweisung auf einem Computer ausgeführt wird, der Computer das Verfahren nach Anspruch 1 oder 2 durchführen kann.

4. Computerprogrammprodukt, wobei das Computerprogrammprodukt eine Anweisung umfasst, die verwendet wird, um das Verfahren nach Anspruch 1 oder 2 durchzuführen.

5. Einrichtung, die konfiguriert ist, um das Verfahren nach Anspruch 1 oder 2 zu implementieren.

## Revendications

1. Procédé de communication basé sur la technologie de demande de répétition automatique hybride, HARQ, dans lequel le procédé comprend :
la génération (401), par un premier dispositif, d'au moins un indicateur de transmission et des données d'au moins un second dispositif, dans lequel l'au moins un indicateur de transmission est utilisé pour indiquer que les données de l'au moins un second dispositif sont des données retransmises ou des nouvelles données transmises, et l'au moins un indicateur de transmission est en correspondance biunivoque avec les données de l'au moins un second dispositif ; et
l'envoi (402), par le premier dispositif, de l'au moins un indicateur de transmission et des données de l'au moins un second dispositif à l'au moins un second dispositif,
dans lequel l'envoi comprend :
l'envoi, par le premier dispositif, d'une première unité de données de protocole de couche physique, PPDU, à l'au moins un second dispositif, dans lequel la première PPDU comprend l'au moins un indicateur de transmission et les données de l'au moins un second dispositif,
dans lequel la première PPDU comprend une pluralité d'unités de données de protocole de commande d'accès au support, MPDU, une première MPDU dans la pluralité de MPDU est configurée pour transporter un indicateur de transmission du second dispositif, et une MPDU autre que la première MPDU dans la pluralité de MPDU est configurée pour porter des données du second dispositif, dans lequel la première MPDU transportant l'au moins un indicateur de transmission et la MPDU autre que la première PDU portant les données sont envoyées à l'aide de différents schémas de modulation et de codage, MCS ; et
lorsque l'indicateur de transmission du second dispositif est utilisé pour indiquer que les données du second dispositif sont des données retransmises, la première MPDU transporte en outre les informations HARQ requises par le second dispositif pour combiner les données, dans lequel les données retransmises sont envoyées à l'aide du même MCS d'une nouvelle transmission.

2. Procédé selon la revendication 1, dans lequel
la MPDU autre que la première MPDU de la pluralité de MPDU est portée sur au moins un bloc HARQ, l'indicateur de transmission du second dispositif comprend au moins un identifiant de bloc HARQ, et l'au moins un identifiant de bloc HARQ est utilisé pour indiquer un bloc HARQ transportant de nouvelles données transmises ou un bloc HARQ transportant des données retransmises dans l'au moins un bloc HARQ.

3. Support de stockage lisible par ordinateur, dans lequel le support de stockage lisible par ordinateur stocke une instruction, et lorsque l'instruction est exécutée sur un ordinateur, l'ordinateur est autorisé à réaliser le procédé selon la revendication 1 ou 2.

4. Produit-programme informatique, dans lequel le produit-programme informatique comprend une instruction utilisée pour réaliser le procédé selon la revendication 1 ou 2.

5. Appareil, configuré pour mettre en oeuvre le procédé selon la revendication 1 ou 2.
